# EUROPEAN PATENT APPLICATION

(11) **EP 2 605 197 A1**
(43) Date of publication of application: **19.06.2013**
(21) Application number: 11306651.8
(22) Date of filing: 13.12.2011
(51) Int. Cl.: G06Q 10/02, G06Q 10/06, G06Q 10/08, G06Q 50/14, G06Q 50/28

(54) **Computer-implemented method and system to respond to an availability computation inquiry**

(71) Applicant: Amadeus, 06410 Biot (FR)
(72) Inventor: Borgis, Fabien, 06600 Antibes (FR); Pioger, Aurélien, 06600 Antibes (FR); Ambolet, Patrice, 06560 Valbonne (FR); Gauchet, Mathilde, 06220 Vallauris (FR); Jaffredo, Grégoire, 06160 Juan les Pins (FR)
(74) Representative: Hautier, Nicolas

(57) **Abstract**

A computer-implemented method to generate travel-related data includes steps of, in response to receiving an inquiry for a multi-segment travel solution at an Inventory System of a reference travel provider, sending a request to an Inventory System of an operating travel provider, the request including Revenue Control data of the reference travel provider; receiving from the operating travel provider a response to the request, the response including Revenue Control data of the operating travel provider and being formulated in accordance with the Revenue Control data of the operating travel provider and the Revenue Control data of the reference travel provider; and formulating a response to the inquiry at the Inventory System of the reference travel provider using at least the Revenue Control data of the reference travel provider, the response received from the operating travel provider and the Revenue Control data received from the operating travel provider. The Revenue Control data is real-time data that includes one or more of Bid Prices, Yields, Fares and Inventory Controls and is conveyed within interactive cascaded messages.

## Description

### TECHNICAL FIELD:

The exemplary embodiments of this invention relate generally to travel reservation methods and systems and, more specifically, relate to computer-implemented inventory systems, revenue management systems and reservation systems used in the travel industry, and even more specifically to dynamic availability calculations for travel providers, such as airlines, in particular in the specific context of codeshare interline connections involving at least two different operating carriers.

### BACKGROUND:

Certain terms used in the following description are defined as follows:
   Availability: This is the number of seats available for sale in a specific (sub-) class, on a single segment O&D or on a multiple segment O&D It is used to accept or deny further bookings in that class.
   Availability computation inquiry: An availability computation request performed in case of Availability polling request or in case of Sell request.
   Availability Polling Request: An Availability Request sent by a Reservation System (e.g., Amadeus Altéa Reservation) to an Inventory System (e.g., Amadeus Altéa Inventory) for a segment or a group of segments (e.g., cryptic entry AN).
   AVS: Availability Status Message. This message notifies concerned airlines or CRS suppliers of space Availability status information.

Bid Price:
A net value (Bid Price, BP) for an incremental seat on a particular flight/leg/cabin in the airline network. The Bid Price is the marginal value of a given flight/leg /cabin, also referred to as minimum acceptable net revenue, hurdle rate, shadow price, displacement cost, or dual cost. The Bid Price is the minimum revenue at which the airline wishes to sell the next seat.

Bid Price Vectors: A measure of the minimum price for which the remaining seats on a flight/leg/cabin can be sold (represents a Bid Price Curve).

Booking Class:
This is a marketing segmentation used for reservations control. Traditionally a Booking Class gathers bookings made for the same kind of product (e.g., 14 days advance purchase booking, non-refundable bookings, etc.), and is designated by a one letter code.

Bucket:
Revenue Control may be achieved by means of Revenue Buckets by leg/cabin. Therefore, and although not always specified as such, a Bucket is implicitly a Revenue Bucket and is the smallest revenue-based entity in which space can be held for Availability and sale. It is an Inventory Bucket based on revenue evaluation, as opposed to the Booking Class which is based on fare product characteristics or marketing segmentation. Revenue Buckets are an approximation of the Bid Price Curve and may be used instead of Bid Price Vectors as Revenue Control data.

Cabin: Physical section of a transport apparatus (aircraft, train, bus, boat, etc.) such as First Class or Economy (Eco).

Codeshare: An agreement entered into by two or more carriers whereby one will operate the service, and the other(s) will market the service under their respective airline codes.

Connection: A connection consists in at least two segments or at least two flights (numbers), e.g. PAR-JFK based on the flights YY 761 (PAR-FRA) and YY 400 (FRA-JFK). A Connection includes one or more via points, i.e., connecting city/airport.

Effective Yield: O&D Yield minus the sum of all leg/cabin bid prices crossing the O&D.

Interline connection: A connection involving segments operated by at least two different travels providers. Pure interline connection, i.e. involving segments operated and marketed by at least two airlines, and codeshare interline connections, i.e. involving segments all marketed by the same airline but operated by at least two different operating airlines.

Interline segment: A segment which is operated by a travel provider, for instance an airline, other than a current reference travel provider, typically a current Reference Airline.

Leg: A non-stop journey between a "departure" point and an "arrival"point. Marketing Free Flow: A Marketing Flight is defined as a Codeshare flight which is marketed by an airline but operated by another airline - in opposition to a Prime Flight. This does not include Franchised Flights, which are not codeshare Flights.

O&D: Origin and Destination, determined by the system and used for making an Availability calculation. Amongst the O&Ds can be distinguished those that are single-segments and multiple-segments , i.e., O&Ds made up of the sequence of at least two distinct connecting flight-segments (i.e. with distinct flight numbers). An O&D can be composed of one or several segments.

Online segment: A segment which is operated by the current Reference Airline

PNR: Passenger Name Record, a record in a database of a computer reservation system that contains the itinerary for a passenger or a group of passengers.

Prime Flight: A Prime Flight is defined as a flight that is both marketed and operated by the same airline under the same flight number.

Segment: One or more legs sharing the same commercial transportation number, typically the same commercial flight number in the case that the segment is an air segment. A segment is a saleable product.

Sell Request: A booking request sent by a Reservation System (e.g., Amadeus Altéa Reservation) to an Inventory System (e.g., Amadeus Altéa Inventory) for a segment or a group of segments (e.g., cryptic entry 'SS').

Yield: The Yield is defined for each class and O&D. The Yield is an estimation of how much revenue the carrier (e.g., airline) receives from a sale on the associated O&D/class.

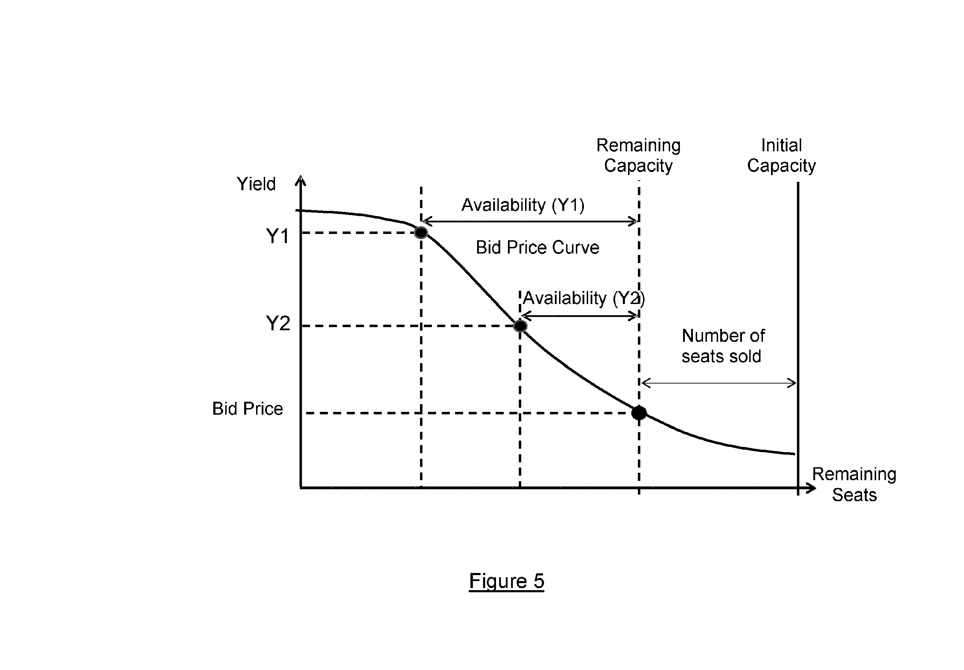

Figure 5 is graph that is useful in understanding the relationships between Yield, a number of Remaining Seats, Capacity, Bid Price, Bid Price Curve and the determination of Availability.

The following discussion will be primarily in the context of an airline being a travel provider (carrier). However, and as should be apparent from the foregoing definitions of various terms, an airline is but one non-limiting type of travel provider.

Currently passengers have the possibility to directly book a travel solution made of several segments, which may or may not be operated by the same airline. An Availability calculation takes into account the connection context.

If these segments are operated by at least two different airlines the travel solution considered is an Interline connection. For example, assume the case of a passenger flying from Nice to Amsterdam, via Paris. From Nice to Paris the passenger will fly with a flight of a company XX, and from Paris to Amsterdam with a flight of another company YY. During the Availability calculation, the company XX will be able to take into account that the passenger flies from Nice to Paris using an XX flight and from Paris to Amsterdam using a YY flight.

A specific type of Interlining exists based on Codeshare agreements between airlines. This type of agreement enables a carrier to market a flight, meaning sell seats under its respective airline code, while another airline will actually operate the flight.

Assuming again the example of the passenger traveling from Nice to Amsterdam, the passenger can book the entire travel solution from Nice to Amsterdam on XX flights, even though from Nice to Paris a flight of airline XX will fly and from Paris to Amsterdam a flight of airline YY will fly.

From the point of view of the passenger the Codeshare agreements bring transparency and the passenger can benefit from a more extended network. For example, assume that airline XX does not fly to Amsterdam with its own flights. However, by the use of the Codeshare agreements airline XX is able to sell tickets to Amsterdam.

From the point of view of the airlines the Codeshare agreements give advantages as well. The Marketing Airline earns Revenue on Marketing Flights, i.e., those flights which do not belong to the airline while the Operating Airline can fill its plane. Then the Revenue is shared in accordance with an applicable prorating arrangement between each carrier involved in the Interline connection.

In addition to the Codeshare agreements airlines belonging to the same alliance attempt to put in place additional agreements in order to maintain O&D logic in the case of Codeshare Interline connections. This can be done by exchanging some Revenue Control data (Interline Bid price) and by forwarding availability polling requests or sell requests (Codeshare cascading), or adjusting Yields used during the process.

During the Availability computation inquiring process each carrier can have the possibility to take into account another airline connecting segment in order to provide less Availability on its own segments if connected with a segment operated by another airline with which there is no agreement. The fact of taking into account the context improves the Availability value the airline wants to answer and optimizes airline's revenue.

In the case of Availability Polling Requests, as well as Sell Requests, two functionalities that enable improving the Availability calculation in the Codeshare context currently exist and are used in the airline industry. These two functionalities can be referred to as Codeshare Cascading and the Interline Bid Price.

Commonly owned W02009138303 A1 describes the real time exchange of information as opposed to an up-load of recommendations between the airline Revenue Management System and the airline Inventory System. This technique does not bear directly on the Availability calculation process.

Commonly owned W09200903623 A1 describes the interaction between a ticketing system and revenue accounting in real time, and discusses the interaction of two revenue accounting systems willing to agree in a revenue sharing arrangement in real time (at ticketing time). This technique does not bear directly on the Availability calculation process.

### SUMMARY

The foregoing and other problems are overcome, and other advantages are realized, in accordance with the embodiments of this invention.

In a first aspect thereof this invention provides a computer-implemented method to respond to an availability computation inquiry for a multi-segment travel. The method includes the steps of, in response to receiving an availability computation inquiry for a multi-segment travel solution at an Inventory System of a Reference Travel Provider, sending a request to an Inventory System of an Operating Travel Provider. The request comprises Revenue Control data of the Reference Travel Provider. A next step of the method includes receiving from the Operating Travel Provider a response to the request, where the response comprises Revenue Control data of the Operating Travel Provider, as well as availability figures or sell decision. The response is formulated in accordance with the Revenue Control data of the Operating Travel Provider and the Revenue Control data of the Reference Travel Provider. The method further includes and formulates a response to the availability computation inquiry at the Inventory System of the Reference Travel Provider using at least the Revenue Control data of the Reference Travel Provider, the response received from the Operating Travel Provider and the Revenue Control data received from the Operating Travel Provider.

The exemplary embodiments also encompass a non-transitory computer-readable medium that contains software program instructions, where execution of the software program instructions by at least one data processor results in performance of operations that comprise execution of the method.

In a further aspect thereof this invention provides a computer-implemented travel reservation and booking system that comprises an Inventory System of a Reference Travel Provider having an input coupled to a Reservation System to receive an availability computation inquiry for a multi-segment travel from the Reservation System. The Inventory System further has an output coupled to the Reservation System to provide a response to the availability computation inquiry. The inventory system comprises at least one data processor operating under control of software instructions stored in at least one memory to respond to a receipt of an availability computation inquiry for a multi-segment travel solution by sending a request to an Inventory System of an Operating Travel Provider, the request comprising Revenue Control data of the Reference Travel Provider, to receive from the Operating Travel Provider a response to the request, the response comprising Revenue Control data of the Operating Travel Provider, the response being formulated in accordance with the Revenue Control data of the Operating Travel Provider and the Revenue Control data of the Reference Travel Provider, and to formulate a response to the availability computation inquiry. The response is formulated using at least the Revenue Control data of the Reference Travel Provider, the response received from the Operating Travel Provider and the Revenue Control data received from the Operating Travel Provider.

In another aspect thereof this invention provides a computer-implemented method to operate an Inventory System of an airline, comprising: receiving one of a Cascaded Interline Availability Polling Request or a Sell Request from an Inventory System of a Marketing airline with which the airline has a Codeshare agreement, where the request is comprised of current, real-time Revenue Control data of at least the Marketing airline. The method further comprises formulating a response to the Availability Polling Request or the Sell Request using Revenue Control data of the airline in conjunction with the Revenue Control data received from the Marketing Airline. The method further comprises sending the response to the Inventory System of the Marketing airline, where the response comprises current, real-time Revenue Control data of the airline.

In another aspect thereof this invention provides a non-transitory computer-readable medium that contains software program instructions, where execution of the software program instructions by at least one data processor results in performance of operations that comprise execution of the above method.

In another aspect thereof this invention provides a computer-implemented method for computing availability for a travel inquiry, the travel comprising more than one segment. The method comprises receiving the travel inquiry for a travel at a Reference Airline, where the travel inquiry comprises one or more contextual data. The method also comprises sending an availability request from the Reference Airline to at least an Operating Airline that is to operate at least one other segment of the travel, the availability request comprising at least the one or more contextual data and further comprising Revenue Control data of at least another Airline that is to operate at least another segment, said other Airline being any one of the Reference Airline and another Operating Airline, the Revenue Control data of said other Airline comprising at least a bid price for each segment to be operated by said other Airline. The method also comprises performing an effective yield calculation at the Reference Airline using at least the bid price for each segment to be operated by said other Airline and the received bid price for each segment to be operated by the Operating Airline. The method also comprises computing an availability based on the calculated effective yield and replying to the travel inquiry with the computed availability for each segment.

In another aspect thereof this invention provides a non-transitory computer-readable medium that contains software program instructions, where execution of the software program instructions by at least one data processor results in performance of operations that comprise execution of the above method.

In a still further aspect thereof this invention provides a computer-implemented method for computing availability for a travel inquiry. The method comprises receiving an availability request from a Reference Airline at an Operating Airline, where the Operating Airline is to operate at least one other segment of the travel, the availability request comprising one or more contextual data and further comprising Revenue Control data of at least another Airline that is to operate at least another segment, said other Airline being any one of the Reference Airline and another Operating Airline, the Revenue Control data of said other Airline comprising at least a bid price for each segment to be operated by said other Airline. The method also comprises performing an effective yield calculation at the Operating Airline using at least a bid price determined by the Operating Airline for each segment to be operated by the Operating Airline and the received bid price for each segment to be operated by said other Airline. The method also comprises for each segment to be operated by the Operating Airline, computing an availability based on the calculated effective yield. The method also comprises sending from the Operating Airline to the Reference Airline an availability reply, the availability reply comprising the availability for each segment to be operated by the Operating Airline and Revenue Control data of the Operating Airline comprising the bid price determined by the Operating Airline for each segment to be operated by the Operating Airline.

In another aspect thereof this invention provides a non-transitory computer-readable medium that contains software program instructions, where execution of the software program instructions by at least one data processor results in performance of operations that comprise execution of the above method.

I n a further aspect thereof this invention provides a computer-implemented method for computing availability for a travel inquiry, the travel comprising more than one segment.
The method comprises the following steps performed at a Reference Airline: receiving the travel inquiry for a travel, where the travel inquiry comprises one or more contextual data, ; sending an availability request to at least an Operating Airline that is to operate at least one other segment of the travel, the availability request comprising at least the one or more contextual data and further comprising Revenue Control data of at least another Airline that is to operate at least another segment, said other Airline being any one of the Reference Airline and another Operating Airline, the Revenue Control data of said other Airline comprising at least a bid price for each segment to be operated by said other Airline. The method also comprises the following steps performed at the Operating Airline: performing an effective yield calculation using at least a bid price for each segment to be operated by the Operating Airline and the received bid price for each segment to be operated by said other Airline; for each segment to be operated by the Operating Airline, computing an availability based on the calculated effective yield; and sending to the Reference Airline an availability reply, the availability reply comprising the availability for each segment to be operated by the Operating Airline and Revenue Control data of the Operating Airline comprising a bid price determined by the Operating Airline for each segment to be operated by the Operating Airline.

The method further comprises the following steps performed at the Reference Airline: receiving from the Operating Airline the availability reply, performing an effective yield calculation using at least the bid price for each segment to be operated by the Reference Airline and the received bid price for each segment to be operated by the Operating Airline; computing an availability based on the calculated effective yield; and replying to the travel inquiry with the computed availability for each segment.

### BRIEF DESCRIPTION OF THE DRAWINGS

The foregoing and other aspects of the embodiments of this invention are made more evident in the following Detailed Description, when read in conjunction with the attached Drawing Figures, wherein:
Figure 1 shows a message and process flow in accordance with an embodiment of this invention for responding to an Availability Polling Request when there is one operating partner airline in communication with a Reference Airline.
Figure 2 shows a message and process flow in accordance with an embodiment of this invention for responding to a Sell Request when there is one operating partner airline in communication with a Reference Airline.
Figure 3 shows a message and process flow in accordance with an embodiment of this invention for responding to an Availability Polling Request when there are two operating partner airlines in communication with a Reference Airline.
Figure 4 shows a message and process flow in accordance with an embodiment of this invention for responding to a Sell Request when there are two operating partner airlines in communication with a Reference Airline.
Figure 5 is graph that is useful in understanding the relationships between Yield, a number of Remaining Seats, Capacity, Bid Price, Bid Price Curve and the determination of Availability.
Figure 6 is a simplified block diagram showing the interaction of two carriers (C1, C2) for a conventional Interline Bid Price method.

### DETAILED DESCRIPTION

A non-limiting aspect of the embodiments of this invention is an enhancement of Codeshare Cascading and the Interline Bid Price functionalities by providing exchanges of real-time currently valid Revenue Control data between involved airlines in the case of Interline connections, and more advantageously in the case of Codeshare Interline connections.

Before describing in further detail the embodiments of this invention it may prove useful to explain in further detail the concepts of the Codeshare Cascading and the Interline Bid Price functionalities.

The Codeshare Cascading functionality enables an airline to provide a dynamic Availability or sell decision for a Marketing Free Flow Segment marketed by the airline but operated by another airline.

In the case of request on a Marketing Free Flow Segment, the inventory system of the marketing airline receives Availability polling or Sell Requests but has no control and no information on the segment. This segment is indeed just sold by the marketing airline but operated by another airline and, as a result, dynamic revenue availability cannot be calculated.

Therefore, the marketing airline Inventory System generally responds to the requester with Availability status (AVS), regularly published by the Operating Airline inventory system. However, this status information is static in nature; is not always up-to-date and does not take into account the context of the request (e.g., the connecting segments, the passenger characteristics, the segment already booked by the passenger or the point of sale). Thus it can lead to overbooking or missed sale opportunities for the operating airline.

If a Cascading agreement exists between both carriers, when a Sell Request or Availability Polling Request on the Marketing Free Flow Segment is received by the marketing airline, its Inventory System identifies the Codeshare segment and forwards the request to the Operating Airline, providing all the segment information (flight number, flight date, board point and off point), and also all of the context (connecting segments, journey data segments, point of sale). Else, AVS are returned by the marketing airline.

The Operating Airline can then calculate dynamic Availability and make a sell decision taking into account the context. The reply is sent to the marketing airline inventory system and then forwarded to the Reservation System.

As a result the marketing airline can provide dynamic Availability to the requester for all segments it markets, including for Marketing Free Flow Segment(s).

The Codeshare Cascading functionality enables an enhanced evaluation of Availability and Sell decisions on Marketing Free Flow Segment(s), as compared to the Availability status (AVS) information that is generally used.

In the case of an Codeshare Interline Connection (meaning one segment operated by the Reference Airline and one segment operated by another airline), Codeshare Cascading enables each Inventory System to be polled and to reply with dynamic Availability on segments it operates.

However, a limitation of the Codeshare Cascading functionality, limitation that has been identified while developing the present invention, is that the O&D Availability, taking into account Revenue Control data of all segments, cannot be computed, as two separate Inventory Systems are used. The Revenue Control data, such as the bid price of each involved leg, are partially available on each side. As such, the O&D logic cannot be applied in this case.

Discussed now is the Interline Bid Price Functionality / Partner price exchange functionality. This functionality enables a calculation of an adjusted Availability, calculated in the O&D context, on a segment, taking into account a connecting segment operating by another airline.

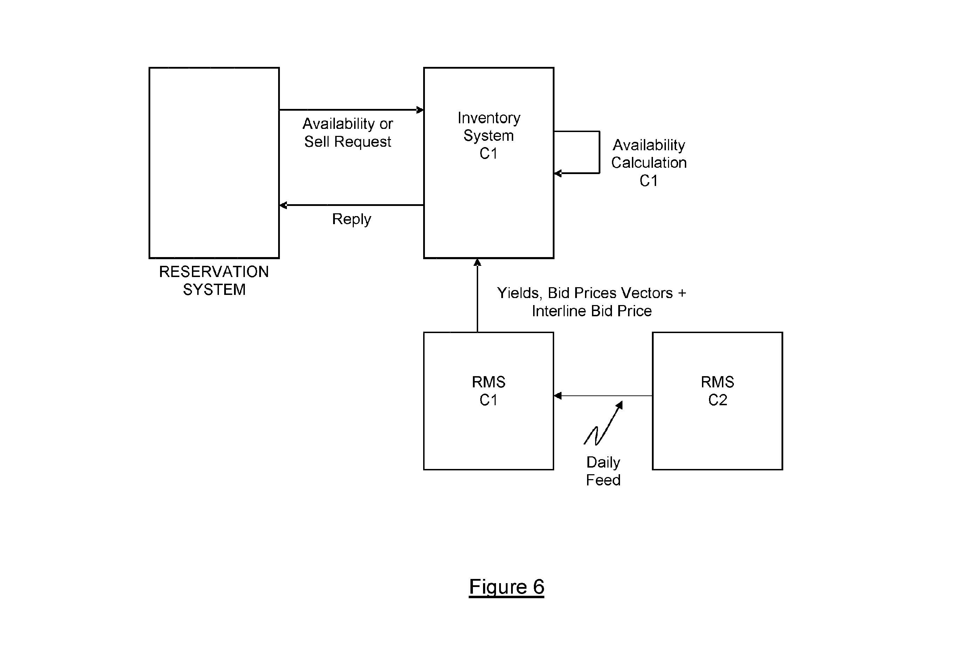

Figure 6 is a simplified block diagram showing the interaction of two carriers for the conventional Interline Bid Price method, and the data and messages exchanged between a Reservation System, an Inventory System and Revenue Management System (RMS) of a first carrier (C1), and the RMS of a second Interline carrier (C2).

In the case of an Interline Partnership between the marketing airline and the Operating Airline, the Operating Airline sends an interline bid price value for each interline leg. This can be accomplished via regular batch exchanges between Revenue Management Systems of each carrier. This interline bid price corresponds to the "revenue" the operating carrier is expecting for the sale of the Codeshare segment.

When a Sell or an Availability Polling Request for Marketing a Free Flow segment in connection with a Prime segment is received, the marketing airline can apply its O&D logic to the full connection, including the Marketing Free Flow Segment.

The Yield corresponding to the full O&D is retrieved and compared to the sum of all bid prices (bid price of each leg of Prime segments of the O&D, and interline bid price of each interline leg of the O&D).

As a result the Reference Airline (C1 in Figure 6) can calculate the O&D Availability on its segment because of the Revenue Control data sent by partners.

However, one limitation of this technique and that has been identified while developing the present invention, is that the Reference Airline does not use a real time Interline bid price, but instead uses one stored in its database and periodically updated (e.g., updated daily) by the Operating Airline. Consequently, these bid prices are not always up-to-date and thus can lead to an erroneous Availability calculation, especially during the last days before the flight departure.

For example, when new bookings are done on the interline segment the bid price on the corresponding leg/cabin increases in the Inventory System of the Operating Airline, but the interline bid price stored in the marketing airline database is not updated until new interline bid prices are published by the operating partner to the marketing airline inventory system.

The present invention provides dynamic availability calculations by airline inventory systems in the case of Availability Polling Requests, as well as Sell Requests. The present invention is particularly advantageous in the specific context of Codeshare Interline connections. In the present invention, the term Availability Computation Inquiry encompasses Availability Polling Requests and/or Sell Requests.

The embodiments of this invention can build on existing features in place in the airline industry to provide O&D Revenue Availability in the case of a Codeshare Interline connection (such as Codeshare Cascading and Interline Bid Price). The invention improves the data exchanges by taking advantage of Cascaded Request messages sent between a marketing partner and an operating partner in order to convey in real-time currently valid Revenue Control data used in an Availability computation algorithm. These real-time data can be one or more of Yield, Bid Prices, Fares, or any other useful inventory control data.

In the case of a connection including a Prime Flight of the Reference Airline (Reference Travel Provider) and a Codeshare segment operated by a Travel Provider being a cascading partner of the Reference Travel Provider, the inventory system of the Reference Airline (RA) forwards the request for the Codeshare segment to the inventory system of the operating carrier (Operating Airline (OA) or more generally Operating Travel Provider) which replies with Availability figures in the case of an Availability Polling Request, or a Sell decision in the case of a Sell Request.

Revenue Control data used by the Operating Airline are sent in the Cascaded Reply from the operating partner and are then used by the Reference Airline to compute O&D Availability on its own segments of the connection.

Moreover, these data can be stored in the PNR after the Sell validation, and can be used at least for revenue sharing and reporting purposes.

The embodiments of this invention enable an exchange of up-to-date Revenue Control data for each request and a more accurate dynamic Availability in the case of an Codeshare Interline connection, resulting in an optimization of the airline's Interline revenue, and a reduction in the risk of discrepancies between data stored in the Inventory systems of involved carriers due to the on-request flow. The exemplary embodiments of this invention further enable the use of existing cascading messages to convey Revenue Control data between involved carriers (e.g., airlines), a reduction in the flow of messages, as a Revenue Control data feed is no longer required between involved partners.. The exemplary embodiments of this invention further are useful in the context of forming stronger partnerships between carriers and alliances by extending the O&D logic to Codeshare Interline connections.

The exemplary embodiments of this invention overcome the foregoing and other limitations in the following manner.
(A) As the Revenue Control data are received real time by the marketing carriers, data used for Availability calculation are always up-to-date, enabling a more accurate Availability calculation and sell decision, consequently, more accurate revenue sharing between involved airlines. Moreover, the Reference Airline also sends its current Revenue Control data in the Cascaded request so that Operating Airline also has up-to-date data. As a result the Availability calculation process is improved for both the Operating and Reference Airlines.
(B) The real-time exchange of Revenue Control data enables the avoidance of discrepancies between airlines, as can occur during daily batch Revenue Control data update procedures. The real-time exchange of data further ensures consistent decision making, as the same data are used to accept or reject, for example, a Sell Request on a Codeshare interline connection.
(C) By the use of this invention the daily Interline bid price batches are no longer required. Furthermore, the real time data exchange does not require a new flow of messages between airlines, as the information is conveyed within the existing Codeshare Cascading request and response messaging structure. As a result message flow between partners is reduced, while providing all necessary information (cascading request plus the Revenue Control data exchange) in only two messages for each Sell or Availability Polling Request.
(D) Once the sell is accepted, the Revenue Control data used for the Availability computation can be stored in the PNR. This data is useful for revenue sharing between involved airlines.
(E) The embodiments of this invention can be implemented between partners using O&D logic, but there is no prerequisite on the specific revenue Availability calculation method that is used. The embodiments are operable with both carriers using revenue buckets, or both carriers with bid price vectors, or with one carrier using revenue buckets and the other carrier using bid price vectors. Note that the bid price exchange method assumes that both airlines use the same method.

The embodiments of this invention improve the 'interline bid price' functionality associated with 'Codeshare cascading' for optimizing the Availability calculation process, for a case of a sell or an Availability Polling Request in the context of Codeshare Interline connection.

As opposed to the exchange of static data between partner carriers via daily batches, the current value of any useful Revenue Control data is provided to the marketing airline within the Cascaded Availability polling and Sell Requests exchanged between the marketing and Operating Airline. This means that the Revenue Control data are conveyed 'on request'.

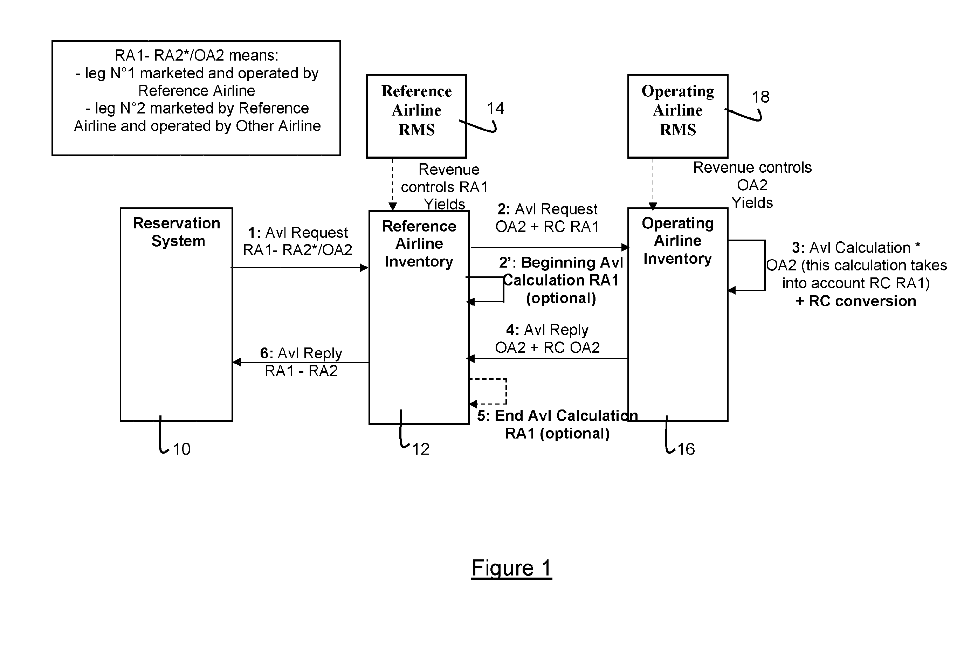

Reference can be made to Figure 1 for showing a message and process flow in accordance with an embodiment of this invention for an Availability Polling Request.

Figure 1 depicts a Reservation System 10 connected with an Inventory System 12 of a Reference Airline (RA). The Inventory System 12 is connected with a Revenue Management System (RMS) 14 of the Reference Airline. The Inventory System 12 is also connected with an Inventory System 16 of an Operating Airline (OA) that in turn is connected with a Revenue Management System (RMS) 18 of the Operating Airline.

The Inventory of the Reference Airline is configured to receive availability computation inquiries (availability polling requests and/or sell requests). Each availability computation inquiry comprises contextual data. The contextual data are related to the transportation service to be provided and may comprise for instance the origin and the destination. The contextual data may also concern the traveler and may comprise for instance data of a traveler profile. The contextual data may also relate to other transportation services booked by the traveler.

### Availability Polling Request

When the Reference Airline receives an Availability Polling Request for a connection involving at least one Prime segment and one Marketing Free Flow Segment operated by another airline, the Reference Airline has to provide Availability figures for both segments.

For Codeshare segment(s), the request with all necessary information is Cascaded to the operating partner, assuming that Codeshare cascading functionality mentioned previously is activated with the operating carrier.

For Prime segment(s), dynamic Availability is calculated. To do so, the Inventory System 12 needs the following data.
(A) An O&D Yield for each class requested, representing the revenue for the Reference Airline for one seat sold in this booking class. These data are always available in the Reference Airline Yield database as the Reference Airline defines it own yields and fares for each origin and destination available.
(B) A Bid price for each leg of the connection. These data are available in the Reference Airline Inventory System 12 for Online legs and represent the minimum revenue expected by the airline. However, there is at least one interline leg for which no bid price is available as there is at least one Marketing Free Flow Segment in the requested connection.

Note that some Revenue Control data is only defined in the Inventory System 16 of the Operating Airline and is not available at the marketing airline side, especially for interline leg(s). However, in accordance with an aspect of this invention this data is conveyed using an existing polling message, and is received from the Operating Airline within the Cascaded Reply.

Discussed now in further detail are the numbered Steps in Figure 1.
(Step 1) The Availability (Avl) Polling Request for all segments (Prime and marketing free flow) is received at the Inventory System 12 of the Reference Airline from the Reservation System 10. Note that RA1-RA2*/OA2 means: Segment number 1 marketed and operated by the Reference Airline, Segment number 2 marketed by the Reference Airline and operated by the other (operating) airline
(Step 2) The Reference Airline identifies the Codeshare segment(s). The cascading agreement is checked and the Availability Polling Request is duplicated and forwarded to the Operating Airline. In the forwarding message 'RC' is Revenue Control data and can comprise, for example, one or more of Bid Price, Yields, Fares and Inventory Controls. The Revenue Control data may also comprise, for example, one or both of a Segment limit (standalone or connection) and a Waitlist status (opened or closed), Revenue Control data are retrieved from the Revenue Management System 14 of the Reference Airline.

Note that Step 2 is performed prior to providing any response to the user. Thus, the decision to provide or not to provide a seat is taken bilaterally. In a conventional system the Reference Airline (RA) can unilaterally refuse the Availability Polling Request.

In the Cascaded request of Step 2, Marketing Free Flow Segment(s) operated by the cascading partner are requested, and connecting segment(s) are sent as well, as contextual flights. For each connecting segment, the Reference Airline sends the current Revenue Control data of each leg/cabin associated with the segment(s).
(Step 2') In parallel, and before receiving the Cascaded Response in Step 4, the Reference Airline starts the Availability calculation for its Prime segment(s). This involves performing validations steps and determining the O&D to be evaluated, determining flight date inventory data, Revenue Control data for the leg(s) operated by the Reference Airline (for interline leg(s), Revenue Control data are not yet available but the Cascaded Reply will provide them) and O&D Yields are retrieved. It is important to notice that the Yield retrieved form RMS 14 is the one that corresponds to the full O&D, i.e., all segments operated by the Reference Airline and the Operating Airline.

This parallel process can be applied in order to reduce the latency of the system, which is an important technical criterion for Availability Polling Request handling. This step is only optional.
(Step 3) The Operating Airline receives the Cascaded Polling Request. The Inventory System 16 computes a dynamic Availability for Marketing Free Flow Segment(s) it operates. This computation uses Revenue Control data on the Marketing Free Flow Segment(s) of the Operating Airline, preferably obtained from the Revenue Management System RMS 18, and the Revenue Control data (RC) provided during Step 2 by the Reference Airline for connecting segment(s) (among which availability and bid prices for legs operated by the Reference Airline). A conversion may be needed for the Revenue Control data provided by the Reference Airline. Among the Revenue Control data retrieved from the RMS 18, there is the Yield corresponding to the full O&D. The full O&D Yield of the Operating Airline is then compared to the sum of all bid prices (bid price of each leg of the O&D as received at step 2, and bid price of each leg of the O&D operated by the Marketing Airline as retrieved from RMS 18). The difference between the O&D Yield retrieved from RMS 18 and the sum of all the Bid Prices is designated Effective Yield of the Operating Airline. In case the O&D Yield is higher than the sum of all bid prices (i.e., the Effective Yield of the Operating Airline is greater than 0), then the Operating Airline can offer at least an available seat. According to the Effective Yield, the Inventory System 16 of the Operating Airline determines a number of available seats for each leg that it is supposed to operate. The total availability offered by the Operating Airline is the minimum of all numbers of available seats for the legs that it is supposed to operate.
(Step 4) The Operating Airline (carrier) replies to the Reference Airline by providing Availability figures for each requested class of the Marketing Free Flow Segment(s), and the current Revenue Control data for each leg(s) crossing these segment(s). In particular, the Operating Airline provides the Reference Airline with the Bid Price and the availability for each leg that is operated by the Operating Airline.
(Step 5) Once the Cascaded Reply is received, the Reference Airline is able to start its own calculation step or to complete the Availability calculation step (2') using the Revenue Control data received from the Operating Airline in Step 4. More precisely, the Reference Airline compares the Yield of the full O&D as retrieved from RMS 14 to the sum of all bid prices (bid price of each leg of Prime segments of the O&D as retrieved from RMS 14, and interline bid price of each leg of the O&D operated by the Operating Airline as received at step 4). The difference between the O&D Yield retrieved from the RMS 14 and the sum of all the Bid Prices is designated Effective Yield of the Reference Airline. The calculation of this Effective Yield provides an intermediate availability as calculated by the Reference Airline. In case the O&D Yield of RMS 14 is higher than the sum of all bid prices (i.e., the Effective Yield of the Reference Airline is greater than 0), then the Reference Airline can offer at least an available seat. According to the Effective Yield of the Reference Airline, the Inventory System 12 of the Reference Airline calculates a number of available seats for each leg that it is supposed to operate. The total availability offered by the Reference Airline is the minimum of all numbers of available seats for the legs that it is supposed to operate.

The final availability for the full O&D is the minimum of the availability as received by the Operating Airline Inventory 16 and the intermediate availability as calculated by the Reference Airline, i.e., the minimum of the total availability offered by the Operating Airline and the total availability offered by the Reference Airline.
(Step 6) The Reference Airline has obtained dynamic Availability figures for each requested segment and booking class. A final Availability Polling Request reply is sent to the Reservation System 10.

### Sell Request

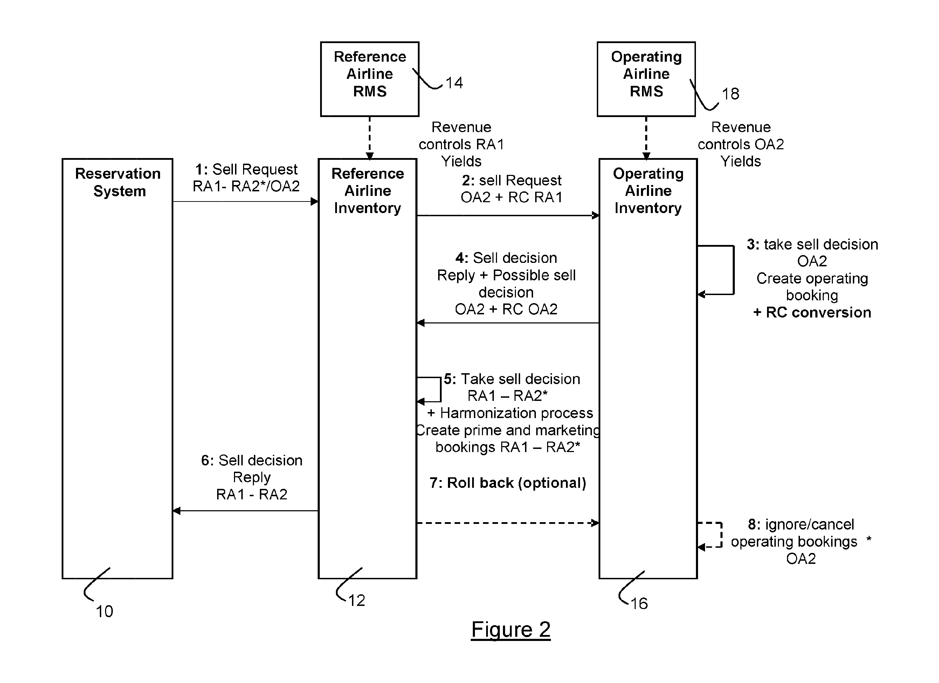

Figure 2 shows a message and process flow in accordance with an embodiment of this invention for a Sell Request. Figure 2 shows the same system components shown in Figure 1.

When the Reference Airline receives a Sell Request from the Reservation System 10 for a connection involving at least one Prime segment and one Marketing Free Flow Segment operated by another airline, the Reference Airline needs to provide a Sell decision for both segments. To do so, the same data as used for the Availability Polling Request plus the number of passengers in the Sell request are needed for making the Sell decision.
(Step 1) The Sell Request for all segments (Prime and Marketing Free Flow) is received by the Inventory System 12 of the Reference Airline from the Reservation System 10.
(Step 2) The Reference Airline identifies the Codeshare segment(s). The Cascading agreement is checked and the Sell Request is duplicated and forwarded to the Inventory System 16 of the Operating Airline. In this Cascaded Request Marketing Free Flow Segment(s) operated by the Cascading partner are requested, and a list of booking classes for which the Sell decision is expected is sent. In addition, connecting segment(s) are sent as well as contextual flights. For each segment, and in accordance with an aspect of this invention, the Reference Airline sends the current Revenue Control data of each leg/cabin associated with the segment(s). Current Revenue Control data sent by the Reference Airline are retrieved from the Revenue Management System 14 of the Reference Airline.
(Step 3) The Inventory System 16 of the Operating Airline receives the Sell Request. The Inventory System 16 makes a Sell decision for those Marketing Free Flow Segment(s) it operates, using its own Revenue Control data received from the RMS 18 for the Marketing Free Flow Segment(s) and using the Revenue Control data (among which availability and bid prices for legs operated by the Reference Airline) provided by the Reference Airline for the connecting segment(s). The Yield corresponding to the full O&D is retrieved from the RMS 18. More precisely and as described above for step (3) of figure 1, the difference between the O&D Yield retrieved from RMS 18 and the sum of all the Bid Prices, designated Effective Yield of the Operating Airline, is calculated. In case the O&D Yield is higher than the sum of all bid prices (i.e., the Effective Yield of the Operating Airline is greater than 0), then the Operating Airline can offer at least an available seat. According to the Effective Yield, the Inventory System 16 of the Operating Airline determines a number of available seats for each leg that it is supposed to operate. The total availability offered by the Operating Airline is the minimum of all numbers of available seats for the legs that it is supposed to operate. A sell decision can therefore be made by the Operating Airline. Bookings on Operating Airline side can therefore be eventually created accordingly.
(Step 4) The Operating Airline (carrier) then replies to the Reference Airline, providing the Sell decision of the Marketing Free Flow Segment(s), and the current Revenue Control data for each leg(s) associated with these segment(s) (comprising at least: the Bid Price and the availability for each leg that is operated by the Operating Airline). In addition, it also sends back another possible Sell decision (e.g., HK ("Held Confirmed"), HL ("Holds Waitlisted"), UC "Not available")).
(Step 5) Once the Cascaded Reply is received, the Reference Airline makes a Sell decision based on the current Revenue Control data returned by the partner airline (Operating Airline) and based on its own Revenue Control data among which; bid prices for each leg that it operates and Yield for the full O&D. The same calculation as detailed for step (5) of figure 1 applies. In particular, the Reference Airline obtains an Effective Yield through calculating the difference between the O&D Yield retrieved from the RMS 14 and the sum of all the Bid Prices for each leg. The calculation of the Effective Yield provides an intermediate availability as calculated by the Reference Airline. A sell decision can therefore be made by the Reference Airline. Bookings on Reference Airline side can therefore be eventually created accordingly.
(Step 6) A harmonization of the Sell decision made on the different segments is performed (in order to reply with same Sell decision for a given O&D if needed). The final Sell decision is the worst Sell decision among the different possible Sell decisions received from all the involved Operating/Prime carriers. Following this harmonization process, all Marketing and Prime bookings are created with their appropriate status and returned to the Reservation System 10.
(Step 7) If needed, a roll back occurs on the Operating Carrier if the harmonization process leads to a change in the final Sell decision of their corresponding marketing flight HK → UC (status: Not Available), HK → HL (status waitlisted), HL → UC). In such cases new bookings at the Operating Airline with appropriate status are created at the end of transaction (EOT).

It is also noted that the invention encompasses use cases where the Reference Airline does not operate any segment of the travel. In this last use case the steps described above still applies, however, the messages that are sent from the Reference Airline to the Operating Airline do not incorporate Revenue Control of the Reference Airline.

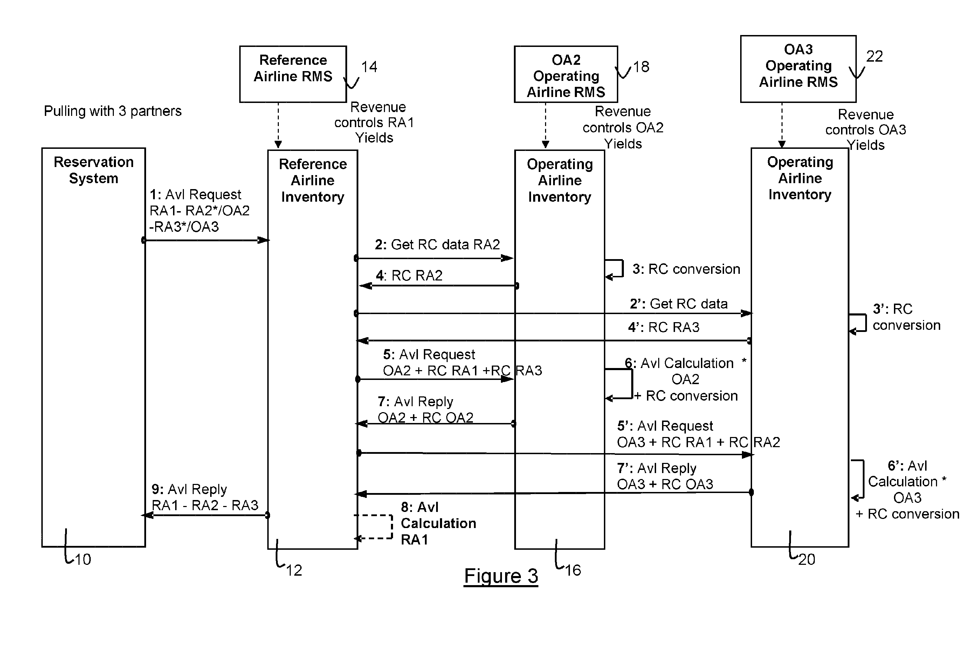

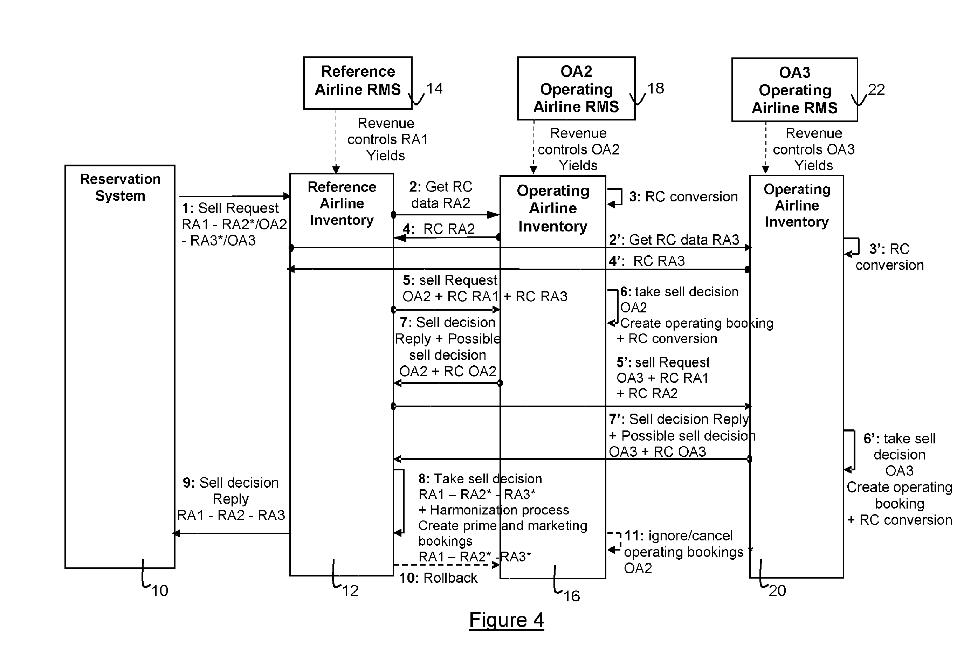

Figures 3 and 4 show an extension of the processes of Figures 1 and 2 for a case of two Operating Airlines (two partner airlines). It is noted that the invention can be extended to more than two Operating Airlines. It is also noted that the invention encompasses use cases where the Reference Airline does not operate any segment of the travel. In this last use case the messages that are sent from the Reference Airline to the various Operating Airlines do not incorporate Revenue Control of the Reference Airline.

In the case of the Availability Polling/Sell Request involving more than two partners, a new interactive call to the operating partners is included in order to convey all necessary data for making the Availability computation. For example, in the case of two operating partners a first message is exchanged by each partner to obtain Revenue Control data on each operating segment(s) (Steps 2, 3, 4, 2', 3' and 4') in the sequence diagrams of Figures 3 and 4. Next the Availability Polling/Sell Request is sent to each partner, with the Reference Airline data and Revenue Control data for the other partner. The partner airline is then able to compute its dynamic availability and return it to the Reference Airline. The Reference Airline receives all up-to-date Revenue Control data and can compute dynamic availability and potentially make a sell decision.

The Availability Polling procedure of Figure 3 is described as follows.

Note that the same optimization process with pre-availability calculation process on the Marketing Airline side is also applicable.
(Step 1) The Availability (Avl) Polling Request for all segments (Prime and Marketing Free Flow) is received at the Inventory System 12 of the Reference Airline from the Reservation System 10. Note in this case that RA1-RA2*/OA2-RA3*/OA3 means: Segment number 1 marketed and operated by the Reference Airline, Segment number 2 marketed by the Reference Airline but operated by a first (operating partner) airline, and Segment number 3 marketed by the Reference Airline but operated by a second (operating partner) airline. The Reference Airline identifies the Codeshare segment(s). A cascading agreement is checked and Revenue Control data is obtained from the applicable partner airlines in Steps 2, 3, 4, 2', 3' and 4'.
(Step 2) The Inventory System 12 of the Reference Airline sends a request to the Inventory System 16 of the first Operating Airline (OA2) to obtain the Revenue Control data of OA2.
(Step 3) OA2 performs the Revenue Control data conversion (if needed). This conversion also could be performed by the Inventory System 12 after step 4.
(Step 4) The Inventory System 16 of OA2 sends the requested Revenue Control data to the Inventory System 12 of the Reference Airline. In particular, the Revenue Control data sent by OA2 to RA1 comprise the Bid Price for each leg of the O&D that OA2 is supposed to operate.
(Step 2') The Inventory System 12 of the Reference Airline sends a request to the Inventory System 20 of the second Operating Airline (OA3) to obtain the Revenue Control data of OA3.
(Step 3') OA3 performs the Revenue Control data conversion (if needed).
(Step 4') The Inventory System 20 of OA3 sends the requested Revenue Control data to the Inventory System 12 of the Reference Airline. In particular, the Revenue Control data sent by OA3 to RA1 comprise the Bid Price for each leg of the O&D that OA3 is supposed to operate.
(Step 5) The Availability Polling Request received at Step 1 is duplicated and forwarded to OA2. In this Cascaded Polling Request (Availability Polling Request) message the Reference Airline sends its Revenue Control data, obtained from RMS 14, as well as the Revenue Control data of OA3 that was received in Step 4'.
(Step 6) The Operating Airline (OA2) receives the Cascaded Polling Request. The Inventory System 16 computes the dynamic Availability for Marketing Free Flow Segment(s) it operates. This computation uses Revenue Control data on the Marketing Free Flow Segment(s) of the Operating Airline OA2 obtained from the RMS 18. In particular the Yield corresponding to the full O&D and the bid prices for the legs operated by OA2 are retrieved from the RMS 18. The computation also uses the Revenue Control data (RC) of the Reference Airline OA2 and the Revenue Controls data (RC) of the second partner airline (OA3). A conversion may be needed for the Revenue Control data of the Reference Airline. Advantageously, the calculations above described at steps (3) referring to figure 1 apply. Thus, OA2 calculates the availability for each leg that it is supposed to operated and then determines the total availability offered by OA2 (minimum of all numbers of available seats for the legs that OA2 is supposed to operate).
(Step 7) The Operating Airline (OA2) replies to the Reference Airline by providing Availability figures for each requested class of the Marketing Free Flow Segment(s), and the current Revenue Control data for each leg(s) crossing these segment(s).
(Steps 5', 6' and 7') These steps mirror Steps 5, 6 and 7 but with OA3. Note that in Step 5', in the Cascaded Polling Request (Availability Polling Request) message the Reference Airline sends its Revenue Control data, obtained from RMS 14, as well as the Revenue Control data of OA2 that was received in Step 4. In Step 6', OA3 calculates the availability for each leg that it is supposed to operated and then determines the total availability offered by OA3 (minimum of all numbers of available seats for the legs that OA3 is supposed to operate). In Step 7' the Operating Airline (OA3) replies to the Reference Airline by providing Availability figures for each requested class of the Marketing Free Flow Segment(s), and the current Revenue Control data for each leg(s) crossing these segment(s).
(Step 8) Once the Cascaded Reply is received from OA3 the Reference Airline is able to perform the Availability calculation using the Revenue Control data received from the Operating Airlines OA2 and OA3 in steps 7 and 7', respectively. A potential harmonization step (in order to reply with the same Availability for a given booking class) is performed through determining the minimum availability computed by RA1 and received from OA2 and OA3. The details above described at steps (5) referring to figure 1 apply.
(Step 9) The Reference Airline has obtained dynamic Availability figures for each requested segment and booking class. A final Availability Polling Request reply is sent to the Reservation System 10.

### Sell Request

The Sell Request procedure of Figure 4 is described as follows.

When the Reference Airline receives a Sell Request from the Reservation System 10 for a connection involving at least one Prime segment and at least two Marketing Free Flow Segments operated by two other partner airlines, the Reference Airline needs to provide a Sell decision for all three segments. In general, the same data as used for the Polling Request plus the number of passengers in the Sell Request are needed for making the Sell decision.
(Step 1) The Sell Request for all segments (Prime and Marketing Free Flow) is received by the Inventory System 12 of the Reference Airline from the Reservation System 10. As in the case of Figure 3, RA1-RA2*/OA2-RA3*/OA3 means: Segment number 1 marketed and operated by the Reference Airline, Segment number 2 marketed by the Reference Airline but operated by a first (operating partner) airline, and Segment number 3 marketed by the Reference Airline but operated by a second (operating partner) airline. The Reference Airline identifies the Codeshare segment(s). A cascading agreement is checked and Revenue Control data is obtained from the applicable partner airlines in Steps 2, 3, 4, 2', 3' and 4'.
(Step 2) The Inventory System 12 of the Reference Airline sends a request to the Inventory System 16 of the first Operating Airline (OA2) to obtain the Revenue Control data of OA2.
(Step 3) OA2 performs the Revenue Control conversion (if needed).
(Step 4) The Inventory System 16 of OA2 sends the requested Revenue Control data to the Inventory System 12 of the Reference Airline.
(Step 2') The Inventory System 12 of the Reference Airline sends a request to the Inventory System 20 of the second Operating Airline (OA3) to obtain the Revenue Control data of OA3.
(Step 3') OA3 performs the Revenue Control data conversion (if needed).
(Step 4') The Inventory System 20 of OA3 sends the requested Revenue Control data to the Inventory System 12 of the Reference Airline.
(Step 5) The Sell Request is duplicated and forwarded to the Inventory System 14 of the first Operating Airline (OA2). In this Cascaded Request Marketing Free Flow Segment(s) operated by the Cascading partner OA2 are requested, and a list of booking classes for which the Sell decision is expected is sent. In addition, connecting segment(s) are sent as well as contextual flights. For each segment, and in accordance with an aspect of this invention, the Reference Airline sends the current Revenue Control data of each leg/cabin associated with the segment(s) obtained from its own RMS 14, as well as the Revenue Control data received from OA3 in Step 4'.
(Step 6) The Inventory System 16 of the Operating Airline OA2 receives the Sell Request. The Inventory System 16 makes a Sell decision for those Marketing Free Flow Segment(s) it operates, using its own Revenue Control data received from the RMS 18 for the Marketing Free Flow Segment(s) and using the Revenue Control data (RC RA1 and RC RA3) provided by the Reference Airline for the connecting segment(s). Bookings are created accordingly on operating airline side..
(Step 7) The Operating Airline OA2 replies to the Reference Airline, providing the Sell decision of the Marketing Free Flow Segment(s), and the current Revenue Control data for each leg(s) associated with these segment(s). In addition, it also sends back another possible Sell decisions as described above with respect to Step 4 of Figure 2.
(Steps 5', 6' and 7') These steps duplicate the activity of Steps 5, 6 and 7 with the interaction between the Reference Airline and the second partner airline OA3. In Step 5' OA3 receives from the Reference Airline the current Revenue Control data of each leg/cabin associated with the segment(s) obtained from its own RMS 14, as well as the Revenue Control data received by the Reference Airline from OA2 in Step 4.

Advantageously, the details of the steps and calculations above described at steps (2), (3) and (4) referring to figures 2 apply for steps (5), (6) and (7) respectively and for steps (5'), (6') and (7') respectively referring to figures 4.
(Step 8) Once the Cascaded Replies are received from both OA2 and OA3 the Reference Airline makes a Sell decision based on the current Revenue Control data returned by the partner airlines. A harmonization of the Sell decisionon the different segments is performed (in order to reply with same Sell decision for a given O&D if needed). As before, harmonization is based on the different possible Sell decisions received from all the involved Operating/Prime carriers. Following this harmonization process, all bookings are created (RA1, RA2, RA3) on marketing and operating sides with their appropriate status.

Advantageously, the details of the steps and calculations above described at step (7) referring to figures 2 apply for steps (8) referring to figures 4.
(Step 9) A Sell Decision Reply is returned to the Reservation System 10.
(Steps 10 and 11) If needed, a roll back occurs on the Operating Carrier if the harmonization process leads to a change in the final Sell decision of their corresponding marketing flight. In this case OA2 can ignore/cancel operating bookings associated created in OA2. The same (optional) roll back process can occur with OA3 .

Described now is a 'link down' procedure, i.e., a communication link outage or failure procedure.

In a case where Cascading cannot be performed between involved airlines (e.g., because of an error returned by an operating carrier or link down between partners), then Availability figures for the Codeshare segment(s) cannot be exchanged and Revenue Control data cannot be shared. However, the Reference Airline still needs to provide Availability figures for all requested flights, Marketing or Prime.

The following mechanism can be applied in order to obtain default Availability:
For the Marketing Free Flow Segment(s), Codeshare AVS previously published by the Operating Airline and stored by marketing partners are returned.
For the Prime segment(s), Revenue Control data available in an Interline Library are used by the Reference Airline to compute Availability and make a sell decision, taking into account the interline segment(s).

That is, if needed historical (non-real-time) Revenue Control data can be used to make the Availability/Sell decision.

Consequently, the Reference Airline has used the up-to-date data for each interline leg of the connection and has calculated real-time dynamic Availability for the Prime segment. In addition, a dynamic Availability/Sell decision has been received from the Operating Airline(s) for Marketing Free Flow Segment(s).

Computing real-time Availability on a connection involving several partners and systems implies certain system-level issues and enhancements.

For example, the latency of the system is an important criterion for request handling, as the time needed to evaluate the request should not increase significantly even if two (or more) inventories are involved and cascading is performed.

The parallel processing described in the steps 2' and 5 of the Polling Request (Figure 1) enables an improvement to be realized in the overall latency.

In case of the Sell Request (Figures 2 and 4), at least two systems are communicating and bookings are potentially created at each system, but the step of harmonization could lead to possible discrepancies between the Inventory Systems 12, 16 and 20. Thus, the optional roll-back mechanism is described in the Steps 7 and 10 of Figures 2 and 4, respectively.

The Revenue Control data exchanged between the involved airlines represent an estimation of the revenue earned by the airline or some costs, expressed in a specific currency and potentially some tax component. In order to use comparable data in the process of the Availability computation a conversion module can be inserted between the respective Inventory Systems enabling a conversion of the Revenue Control data to be accomplished so as to ensure consistency between the Revenue Control data.

Several examples of the use of the invention are now provided with reference to Figures 1 and 2. Extensions of these examples to the case of more than one partner airline (Figures 3 and 4) will be readily apparent to those skilled in the art.

### Example 1: Availability Polling case (Figure 1)

An Availability Polling Request is received from the Reservation System 10 by the Inventory System 12 of the Reference Airline (RA) for the following connection:
- RA1 on the 20th of September 2011, from JFK to CDG via LHR (Prime Flight)
- RA2 on the 21st of September 2011, from CDG to BKK via FRA (Marketing Free Flow flight operated by another airline (e.g., OA2).

Cascading and Revenue Control data exchange agreements are assumed to exist between the involved carriers, and thus the RA receives the Availability Polling Request and cascades the Availability Polling Request to the Inventory System 16 of OA2. The following describes each step of the process:
1) First request sent to RA Inventory System 12:
   - RA1 20Sep11 JFK-CDG /Class C requested
   - RA2 21Sep11 CDG-BKK / Class C requested
2) Cascaded Request sent to OA Inventory from the RA Inventory System 12 to the OA Inventory System 16 (step 2 of Figure 1) with Revenue Control data of the RA:
   - RA1 20Sep11 JFK-CDG Not requested
      Leg JFK-LHR BP=450 euros
      Leg LHR-CDG BP=150 euros
   - OA2 21 Sep11 CDG-BKKClass C requested
3) Availability calculation is performed at the Inventory System 16 of the OA2 for OA2/class C (step 3 of Figure 1) using also the Revenue Control data of RA as follows:
   - O&D Yield is retrieved from the RMS 18 by the Inventory System 16: Yield JFK-BKK (note that the yield is retrieved according to the entire O&D): class C = 1500 euros
   - Effective Yield calculation that is performed by the Inventory System 16 of the OA yields:
      Leg JFK-LHR IBP=450 euros
      Leg LHR-CDG IBP=150 euros
      Leg CDG-FRA BP=100 euros
      Leg FRA-BKK BP=600 euros -> Eff Yield = 1500 - (450+150+100+600) = 200 euros
   - Comparison to Revenue Control data that is performed by the Inventory System 16 of the OA results in:
      Leg CDG-FRA -> Avl = 5
      Leg FRA-BKK -> Avl = 4
   - Reconciliation:
      Revenue Availability OA2/class C = 4
4) Reply from OA Inventory System 16 to the Inventory System 12 of the RA (sent at step 4 in Figure 1) with the Revenue Control data of the OA:
   - OA2 21 Sep11 CDG-BKK
      Class C: Avl=4
      Leg CDG-FRA BP=100 euros
      Leg FRA-BKK BP=600 euros
5) Availability calculation at the Inventory System 12 at the RA side for OA2/class C is as follows:
   - O&D Yield retrieved from RMS 14: Yield JFK-BKK class C = 1600 euros
   - Effective Yield calculation:
      Leg JFK-LHR BP=450 euros
      Leg LHR-CDG BP=150 euros
      Leg CDG-FRA IBP=100 euros
      Leg FRA-BKK IBP=600 euros
      -> Eff Yield = 1600 - (450+150+100+600) = 300 euros
      - Comparison to Revenue Control data at the Inventory System 12 yields:
         Leg JFK-LHR -> Avl = 3
         Leg LHR-CDG -> Avl = 4
      - Reconciliation:
         Revenue Availability RA1/ class C = 3
      - Harmonization that is performed at the Inventory System 12 provides:
         Availability class C RA1 = Availability class C RA2 = 3 Availability = Min [Availability class C RA1 ; Availability class C RA2]
6) Final reply sent by RA Inventory System 12 to the Reservation System 10:
   - RA1 20Sep11 JFK-CDG
      Class C: avl=3
   - RA2 21Sep11 CDG-BKK
      Class C: avl=3

### Example 2: Sell case (Figure 2)

A Sell Request for four passengers is received from the Reservation System 10 by the Inventory System 12 of the Reference Airline (RA) for the following connection:
- RA1 on the 20th of September 2011, from JFK to CDG via LHR (Prime Flight)
- RA2 on the 21 st of September 2011, from CDG to BKK via FRA (Marketing free flow flight operated by other airline OA).

Cascading and Revenue Control data exchange agreements are assumed to exist between the involved carriers, and thus RA receives the Sell Request and Cascades same to the Inventory System 16 of OA2. The following process then ensues.
1) First request sent to RA Inventory (Inventory System 12 of the Reference Airline):
   - RA1 20Sep11 JFK-CDGClass C requested
   - RA2 21Sep11 CDG-BKK
   Class C requested
2) Cascaded Sell Request sent to OA Inventory System 16 at step 2 of Figure 2 along with the Revenue Control data of the RA:
   - RA1 20Sep11 JFK-CDG Not-requested + RC data
   - OA2 21 Sep11 CDG-BKK
      Class C Requested
3) Make Sell decision at OA2 and create booking based on Revenue Control data of the OA retrieved from the RMS 18 and also the Revenue Control data received from the RA:
   - Revenue Availability OA2/class C = 3
   - OA2 booking is created with a HL status
4) Reply from OA2 Inventory System 16 to the Inventory System 12 of the RA (step 4 of Figure 2) that is sent with the Revenue Control data of the OA:
   - OA2 HL 21Sep11 CDG-BKK + RC data
5) Make Sell decision at the Reference Airline Inventory System 12 using the reply from the OA and create booking
   - Revenue Availability RA1 - RA2* /class C = 4
   - RA1 cannot be confirmed due to the harmonization process
   - RA bookings are created in the appropriate status
6) Final reply sent by RA Inventory System 12 to the Reservation System 10:
   - RA1 HL 20Sep11 JFK-CDG
   - RA2 HL 21Sep11 CDG-BKK

As should be realized the Reservation System 10, the Inventory Systems 12, 16 and 20, and the Revenue management Systems, 14, 18 and 22 can each comprise at least one data processor operating under control of software instructions stored in at least one memory. The Reservation System 10, the Inventory Systems 12, 16 and 20, and the Revenue management Systems, 14, 18 and 22 can be implemented as respective servers that are geographically distributed and interconnected via any type of suitable data communication network. Further, and by example, the functionality of the Reservation System 10, Inventory System 12 and RMS 14, or the Inventory System 12 and RMS 14, can be integrated into one computing platform.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent algorithms and data representations may be attempted by those skilled in the art. Further, the various names used for the different elements, functions and message types (e.g., Codeshare Cascading, Interline Bid Price, Prime Flight, Availability Polling Request, Sell Request, Revenue Control, etc.) are merely descriptive and are not intended to be read in a limiting sense, as these various elements, functions, data types and message types can be referred to by any suitable names. All such and similar modifications of the teachings of this invention will still fall within the scope of the embodiments of this invention.

Furthermore, while described above primarily in the context of travel solutions provided by airlines (air carriers), those skilled in the art should appreciate that the embodiments of this invention are not limited for use only with airlines, but could be adapted as well for use with other types of travel modalities and travel providers including, as non-limiting examples, providers of travel by ship, train, motorcar and bus.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

## Claims

1. A computer-implemented method to respond to an availability computation inquiry for a multi-segment travel, comprising steps of:
in response to receiving the availability computation inquiry for a multi-segment travel solution at an Inventory System of a Reference Travel Provider, sending a request to at least an Inventory System of an Operating Travel Provider, the request comprising Revenue Control data of the Reference Travel Provider;
receiving from the Operating Travel Provider a response to the request, the response comprising Revenue Control data of the Operating Travel Provider, the response being formulated in accordance with the Revenue Control data of the Operating Travel Provider and the Revenue Control data of the Reference Travel Provider; and
formulating a response to the availability computation inquiry at the Inventory System of the Reference Travel Provider using at least the Revenue Control data of the Reference Travel Provider, the response received from the Operating Travel Provider and the Revenue Control data received from the Operating Travel Provider.

2. The method of claim 1, where the Reference Travel Provider and the Operating Travel Provider are each an airline having a cascading codeshare agreement.

3. The method of claim 2, where the availability computation inquiry is a multi-segment Availability Polling Request.

4. The method of claim 2, where the availability computation inquiry is a multi-segment Sell Request.

5. The method of claim 3, where the step of formulating the response to the availability computation inquiry at the Inventory System of the Reference Airline is initiated prior to receiving the response from the Operating Airline, and is completed after receiving the response from the Operating Airline.

6. The method as in any one of claims 2-5, where the Revenue Control data are real-time and currently valid data and comprise any one of: one or more of Bid Prices, Yields based on the Origin and Destination of the multi-segment travel.

7. The method as in any one of claims 2-5, where the Revenue Control data of the Operating Travel Provider are real-time and currently valid data of the Operating Travel Provider and comprise one or more of: current Bid Prices of the Operating Travel Provider, Yields of the Operating Travel Provider based on the Origin and Destination of the multi-segment travel.

8. The method as in any one of claims 2-5, where the Revenue Control data of the Reference Travel Provider are real-time, currently valid data of the Reference Travel Provider and comprise one or more of: current Bid Prices of the Reference Travel Provider, Yields of the Reference Travel Provider based on the Origin and Destination of the multi-segment travel.

9. The method as in any one of claims 2-5, where the Reference Travel Provider is to operate at least a segment of the multi-segment travel and the Operating Travel Provider is to operate at least another segment of the multi-segment travel.

10. The method as in claim 6, where the Revenue Control data of the Operating Airline undergoes at least a currency conversion process prior to being received by the Reference Airline.

11. The method of claim 4, where formulating the response to the availability computation inquiry comprises performing a harmonization process based on different possible Sell decisions received by the Reference Airline, and creating and returning all resulting bookings with their appropriate status to the Reservation System.

12. The method as in any one claims 2-11, where there are at least two Operating Airlines comprising a first Operating Airline and a second Operating Airline, and further comprising an initial step of the Reference Airline querying each of the first and second Operating Airlines for their currently valid Revenue Control data, and where sending the request to the Inventory System of the Operating Airline comprises sending the request so as to comprise the Revenue Control data of the Reference Airline and also the Revenue Control data of the second Operating Airline, and further comprising sending the request to the Inventory System of the second Operating Airline so as to comprise the Revenue Control data of the Reference Airline and also the Revenue Control data of the first Operating Airline.

13. The method of claim 12, where formulating the response to the availability computation inquiry at the Inventory System of the Reference Airline uses at least the Revenue Control data of the Reference Airline, a response received from the first Operating Airline and Revenue Control data received from the first Operating Airline, and also a response received from the second Operating Airline and Revenue Control data received from the second Operating Airline.

14. A non-transitory computer-readable medium that contains software program instructions, where execution of the software program instructions by at least one data processor results in performance of operations that comprise execution of the method as in any one of claims 1-13.

15. A computer-implemented travel reservation and booking system comprising:
an Inventory System of a Reference Travel Provider having an input coupled to a reservation system to receive an availability computation inquiry for a multi-segment travel from the reservation system and further having an output coupled to the reservation System to provide a response to the availability computation inquiry, where
said Inventory System comprises at least one data processor operating under control of software instructions stored in at least one memory to respond to a receipt of an availability computation inquiry for a multi-segment travel solution by sending a request to at least an Inventory System of an Operating Travel Provider, the request comprising Revenue Control data of the Reference Travel Provider, to receive from the Operating Travel Provider a response to the request, the response comprising Revenue Control data of the Operating Travel Provider, the response being formulated in accordance with the Revenue Control data of the Operating Travel Provider and the Revenue Control data of the Reference Travel Provider, and to formulate a response to the availability computation inquiry using at least the Revenue Control data of the Reference Travel Provider, the response received from the Operating Travel Provider and the Revenue Control data received from the Operating Travel Provider.
